# EUROPEAN PATENT APPLICATION

(11) **EP 4 782 812 A1**
(43) Date of publication of application: **29.07.2026**
(21) Application number: 26153605.6
(22) Date of filing: 22.01.2026
(51) Int. Cl.: G01N 3/02

(54) **CONTROL SYSTEM AND METHOD FOR CONFIGURING MATERIAL TESTING APPARATUS**

(30) Priority: 28.01.2025 GB 202501219
(71) Applicant: Illinois Tool Works Inc., Glenview IL 60025 (US)
(72) Inventor: REIFF-MUSGROVE, Rebecca, Glenview, 60025 (US); CASTILLO, Francisco, Glenview, 60025 (US); GRANT, Michael, Glenview, 60025 (US); SQUIRES, Steven, Glenview, 60025 (US)
(74) Representative: HGF

(57) **Abstract**

The present invention relates to the configuration of a material testing apparatus.. A control system is provided comprising one or more processors; and a memory storing computer executable instructions therein. The instructions, when executed by the one or more processors, cause the one or more processors to provide a user interface for configuration of the material testing apparatus at a user interface device associated with the material testing apparatus. The user interface comprises a hardware input field comprising a plurality of selectable hardware fixtures for the material testing apparatus; and one or more configuration input fields each indicative of a configuration parameter for the material testing apparatus. The control system determines, in dependence on a hardware input provided to the hardware input field, a selected hardware fixture of the plurality of selectable hardware fixtures; controls the user interface to restrict an available input for at least one of the configuration input fields in dependence on the selected hardware fixture; determines, in dependence on a configuration input provided to the one or more configuration input fields, a selected configuration parameter for each of the one or more configuration input fields; and outputs a control signal to configure the material testing apparatus according to each selected configuration parameter.

## Description

This invention relates to the configuration of a material testing apparatus. Aspects of the invention relate to a control system, a material testing system, a computer-implemented method and computer software.

### BACKGROUND

A material testing apparatus is used to test the physical characteristics of a material sample. The material testing apparatus comprises a fixture to hold and exert force upon the material sample. This fixture may be removable and replaceable, such that the material testing apparatus may be adapted to perform different types of material test or may be adapted to test different specimen types by using different hardware fixtures. For example, different fixtures may include a grip, a compression platen, or a bend, amongst others.

Currently, when setting up the material testing apparatus to configure a new test process, a user of the material testing apparatus is required to manually configure a large number of options for the apparatus (such as positional limits, tuning values, test direction, and test type). As such, a high burden is placed on the end user to configure the apparatus appropriately. This can further pose a risk to damage of the material testing apparatus, a specimen or a fixture due to inappropriate settings being configured.

It is an aim of the invention to mitigate one or more of the problems of the prior art.

### SUMMARY OF INVENTION

In accordance with the present inventions there is provided a control system, a material testing system, a method and computer software.

According to one aspect there is provided a control system for a material testing apparatus, the control system comprising: one or more processors; and a memory storing computer executable instructions therein which, when executed by the one or more processors, cause the one or more processors to: provide a user interface for configuration of the material testing apparatus at a user interface device associated with the material testing apparatus, the user interface comprising: a hardware input field comprising a plurality of selectable hardware fixtures for the material testing apparatus; and one or more configuration input fields each indicative of a configuration parameter for the material testing apparatus; determine, in dependence on a hardware input provided to the hardware input field, a selected hardware fixture of the plurality of selectable hardware fixtures; control the user interface to restrict an available input for at least one of the configuration input fields in dependence on the selected hardware fixture; determine, in dependence on a configuration input provided to the one or more configuration input fields, a selected configuration parameter for each of the one or more configuration input fields; and output a control signal to configure and/or control movement of the material testing apparatus according to each selected configuration parameter.

Advantageously, the user makes a selection of a currently used hardware fixture for the material testing apparatus prior to configuration. Then, the user interface may restrict the subsequent input fields to limit the fields to appropriate values or options for the hardware fixture selected, thereby streamlining the configuration process for the user by reducing the amount of available settings. Further, inappropriate or incompatible options can be removed, thereby preventing damage to the material testing apparatus.

Optionally, each of the plurality of selectable hardware fixtures correspond to fixtures which can be removably fitted to the material testing apparatus, and the selected hardware fixture corresponds to a fixture currently fitted to the material testing apparatus. For example, the plurality of selectable hardware fixtures may comprise one or more of: an automatic grip; a manual grip; a compression platen; a 3 point bend; a 4 point bend; a fixture for testing a spinal implant; a fixture for testing a dental implant; an XY stage; a clevis; a pull-rod; or a collet grip.

Optionally, the memory is configured to store hardware dependent configuration data, the hardware dependent configuration data indicative of the plurality of selectable hardware fixtures and, for each hardware fixture, a corresponding set of restrictions for the configuration parameters. For example, the hardware dependent configuration data may be a look up table or other data structure. Each selectable hardware fixture may be assigned one or more properties in the configuration data. Each property may be associated with a corresponding set of restrictions for the hardware fixture(s) assigned that property. For example, the one or more properties may include a linear only property indicating the assigned hardware fixture(s) are only suitable for linear testing, a compression only property indicating the assigned hardware fixture(s) are only suitable for compressive testing, and/or a tensile only property indicating the assigned hardware fixture(s) are only suitable for tension testing. Each selectable hardware fixture may also be associated with a set of hardware limits, such as position limits or force limits. The hardware limits may be preconfigured and stored in memory, associated with the hardware fixture. Alternatively, the hardware limits may be input by the user at the user interface during configuration. The instructions may cause the one or more processors to retrieve, from the hardware dependent configuration data, the set of restrictions corresponding to the selected hardware fixture; and control the user interface to restrict the one or more configuration input fields in dependence on the retrieved set of restrictions.

Optionally, the instructions cause the one or more processors to control the user interface to restrict the at least one of the configuration input fields by: limiting an available range of values for the field; removing one or more options for selection from the field; automatically selecting a configuration parameter for the field; or removing the field.

Optionally, the instructions further cause the one or more processors to: control the user interface to display a suggested parameter for at least one of the configuration input fields of the user interface in dependence on the selected hardware fixture. Thus, the user interface may provide suggested parameters even when the configuration input field is not further restricted.

Optionally, the one or more configuration input fields includes a test position limit field for selection of an upper and/or a lower position limit of an actuator of the material testing apparatus; and the instructions cause the one or more processors to control the user interface to restrict available values of the test position limit field in dependence on the selected hardware fixture. For example, the available values may be limited in dependence on any predefined hardware limits in the hardware dependent configuration data.

Optionally, the one or more configuration input fields include a test force limit field for selection of an upper and/or a lower force limit of an actuator of the material testing apparatus; and the instructions cause the one or more processors to control the user interface to restrict the available values of the test force limit field in dependence on the selected hardware fixture. For example, the available values may be limited in dependence on any predefined hardware limits in the hardware dependent configuration data.

The configuration input fields may comprise a test type field for selecting a cyclic, a static, or a static rotary test type parameter for the material testing apparatus.

A subset of the plurality of selectable hardware fixtures may categorized as linear only hardware fixtures. For example, the subset may be assigned the linear only property in the hardware dependent configuration data. The instructions may cause the one or more processors to: in dependence on the selected hardware fixture being categorized as a linear only hardware fixture, control the user interface to restrict an available input for the test type field to remove the static rotary test type. The user interface may be further controlled to restrict or remove any additional rotary test configuration fields, such as removing rotary tuning, and removing rotary axis test limits.

The configuration input fields may comprise a test direction field for selecting a tension, a compression, or a combined test direction parameter.

Optionally, a subset of the plurality of selectable hardware fixtures are categorized as tensile only hardware fixtures. In dependence on the selected hardware fixture being categorized as a tensile only hardware fixture, the user interface may automatically select the test direction parameter to be tension. Optionally, the user interface may remove the test direction field entirely or remove the compression and combined test direction parameters as selectable options. In some embodiments, further restrictions or suggestions may be made to the configuration input fields. For example, suggested position and force test limits may be suggested to prevent compressive movement or loading. Further, tuning parameters may be adjusted to provide a remove slack step and provide appropriate tensile tuning. That is, the tuning may be configured such that the actuator will move in the tensile direction to remove any slack in a loadstring before tuning.

Optionally, a further subset of the plurality of selectable hardware fixtures are categorized as compressive only hardware fixtures; and wherein the instructions cause the one or more processors to: in dependence on the selected hardware fixture being categorized as a compressive only hardware fixture, automatically select the test direction parameter to be compression. Optionally, the user interface may remove the test direction field entirely or remove the tension and combined test direction parameters as selectable options. In some embodiments, further restrictions or suggestions may be made to the configuration input fields. For example, suggested position and force test limits may be suggested to prevent tensile movement or loading. Further, tuning parameters may be adjusted to provide a make contact step and provide appropriate compressive tuning.

Optionally, the user interface further comprises one or more tuning fields each indicative of a tuning parameter for the material testing apparatus; and wherein the instructions cause the one or more processors to: provide, on the one or more tuning fields of the user interface, suggested tuning parameters in dependence on the selected hardware fixture; and control the material testing apparatus to perform tuning based on the tuning parameters.

For example, the tuning parameters may comprise a maximum tuning force and/or a maximum tuning displacement.

Optionally, the user interface is arranged to display: a first screen comprising the hardware input field; and at least one second screen comprising the one or more configuration input fields; and the user interface is configured to switch from displaying the first screen to displaying the at least one second screen in dependence on a user input. The user interface may be arranged to display a plurality of second screens, for example a test parameter screen, a tuning screen and a limit screen. The first screen and at least one second screen may be adjacent in a workflow, or may be separate. That is, the first screen and at least one second screen may be navigated to independently at the user interface by a user, e.g. by selecting different parts of a displayed menu.

According to another aspect there is provided a material testing system comprising: a material testing apparatus; the control system of the above aspect; and an user interface device associated with the material testing apparatus.

According to another aspect there is provided a computer-implemented method for configuring a material testing apparatus, the method comprising: providing a user interface for configuration of the material testing apparatus at a user interface device associated with the material testing apparatus, the user interface comprising: a hardware input field comprising a plurality of selectable hardware fixtures for the material testing apparatus; and one or more configuration input fields each indicative of a configuration parameter for the material testing apparatus; determining, in dependence on a hardware input provided to the hardware input field, a selected hardware fixture of the plurality of selectable hardware fixtures; controlling the user interface to restrict an available input for at least one of the configuration input fields in dependence on the selected hardware fixture; determining, in dependence on a configuration input provided to the one or more configuration input fields, a selected configuration parameter for each of the one or more configuration input fields; and configuring and/or controlling movement of the material testing apparatus according to each selected configuration parameter.

According to another aspect there is provided computer software which, when executed, is arranged to perform a method according to the above aspect.

### BRIEF DESCRIPTION OF THE SEVERAL VIEWS OF THE DRAWINGS

Embodiments of the invention are further described hereinafter with reference to the accompanying drawings, in which:
FIG. 1 illustrates a material testing system in accordance with one embodiment.
FIG. 2 illustrates a schematic of a control system in accordance with one embodiment.
FIG. 3 illustrates a screen displayed by a user interface in accordance with one embodiment.
FIG. 4A illustrates a screen displayed by a user interface in accordance with one embodiment.
FIG. 4B illustrates a screen displayed by a user interface in accordance with one embodiment.
FIG. 5A illustrates a screen displayed by a user interface in accordance with one embodiment.
FIG. 5B illustrates a screen displayed by a user interface in accordance with one embodiment.
FIG. 5C illustrates a screen displayed by a user interface in accordance with one embodiment.
FIG. 5D illustrates a screen displayed by a user interface in accordance with one embodiment.
FIG. 6 illustrates a flowchart of a method in accordance with one embodiment.

### DETAILED DESCRIPTON

The present invention provides an improved method and control system for configuring a material testing system. By restricting configuration input fields of a user interface depending on selected hardware, configuration is simplified and incompatible settings (e.g. preventing a test force that exceeds hardware limits) are prevented, thereby reducing the risk of damage to the apparatus.

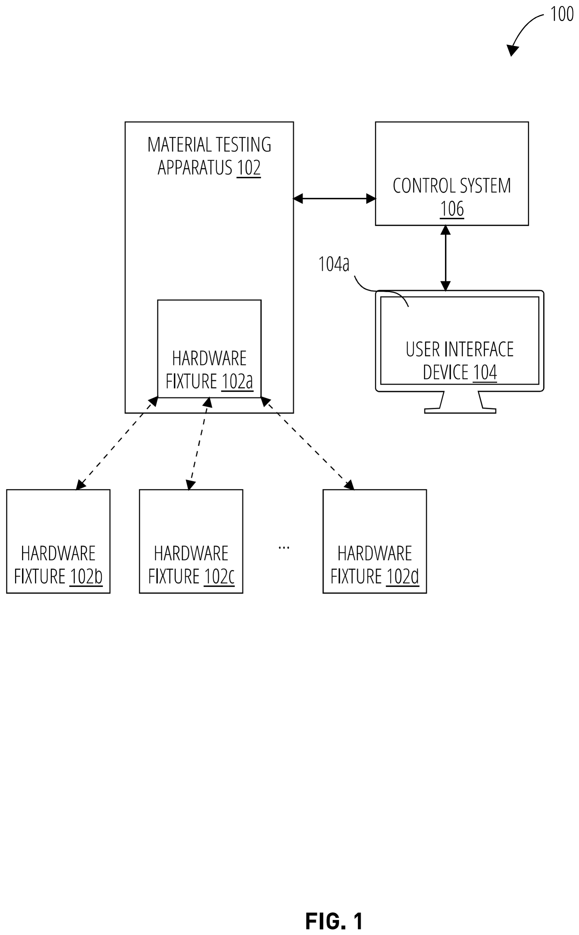

According to FIG. 1, there is illustrated a material testing system 100 according to an embodiment. The material testing system 100 comprises a material testing apparatus 102, a control system 106 and a user interface device 104 associated with the material testing apparatus 102.

The material testing apparatus 102 is used to test the physical characteristics of a material sample or specimen. The material testing apparatus comprises a hardware fixture 102a to hold and exert force upon the specimen. Different hardware fixtures may be used for different specimens and/or different test types. Therefore, the hardware fixture 102a may be removable from the material testing apparatus 102 and replaceable with another hardware fixture 102b, 102c, 102d. Although four different hardware fixtures are illustrated, this is non-exhaustive and any number of hardware fixtures may be implemented in conjunction with the material testing apparatus 102.

Example hardware fixtures may include an automatic grip fixture; a manual grip fixture; a compression platen fixture; a 3 point bend fixture; a 4 point bend fixture; a fixture for testing a spinal implant; a fixture for testing a dental implant; an XY stage fixture; a clevis fixture; a pull-rod fixture; or a collet grip fixture, inter alia.

A user may insert a specimen into the hardware fixture 102a installed in the material testing apparatus 102 and control the material testing apparatus 102 to perform a test on the specimen. For example, the material testing apparatus 102 may perform a cyclic, or fatigue, test for evaluating the specimen's fatigue behavior by subjecting it to repeated loading cycles. In another example, the material testing apparatus 102 may perform a static test by applying a static force such as tension, compression, flexure, shearing or torsion to evaluate strength and/or deformation behavior of the specimen. Given the wide range of test types and specimen properties typically supported by such a material testing apparatus 102, the user of the apparatus is required to configure the apparatus prior to testing to define the test type and test parameters required. For example, the configuring may comprise tuning the apparatus, setting position and/or force limits to prevent the apparatus exceeding the limits, and setting a direction in which the apparatus operates.

The material testing system 100 comprises at least one user interface device 104 configured to provide a user interface 104a to a user of the material testing apparatus 102. The user interface device 104 comprises at least one output device, such as a display device or the like, and at least one input device for receiving a user input. In some embodiments, the output device and input device are integrated as a single user interface device 104, such as a touch sensitive display. In other embodiments, the user interface device 104 may comprise several input and/or output devices in communication. The user interface comprises a plurality of fields for selecting parameters during configuration of the material testing apparatus 102, as will be explained. The user may provide input at the user interface to select the test parameters and configure the material testing apparatus 102. For example, the configuring may comprise tuning the apparatus, setting position and/or force limits to prevent the apparatus exceeding the limits, and setting a direction in which the apparatus operates.

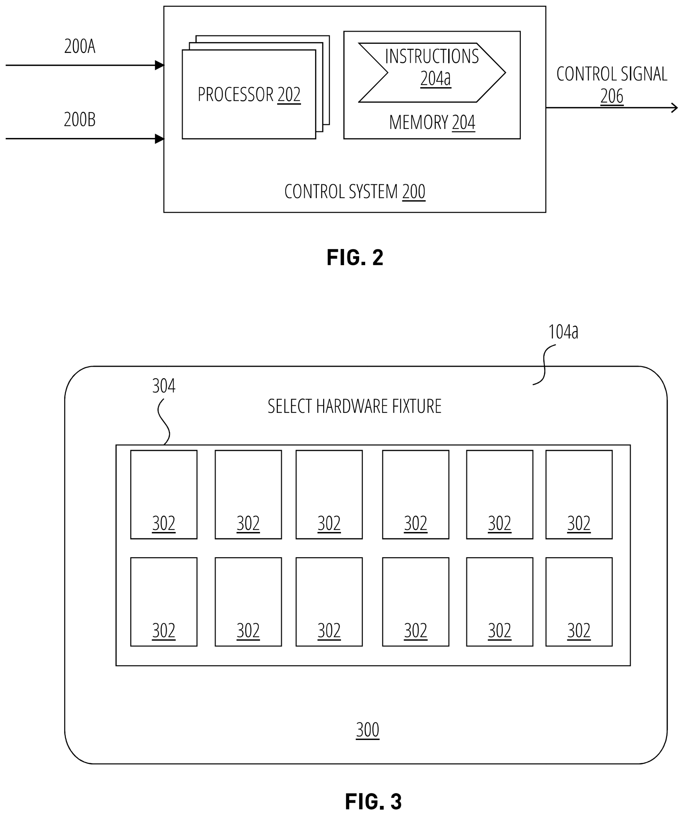

With reference to FIG. 2, there is shown a schematic illustration of a control system 200 for a material testing apparatus, such as the material testing apparatus 102. The control system 200 may correspond to the control system 106 when implemented in the material testing system 100. The control system may comprise one or more computing devices, such as a laptop, a tablet, a desktop computer, a server computer or the like. The control system 200 is communicatively coupled to each of the user interface device 104 and the material testing apparatus 102. The control system 200 is configured to receive user input data 200A, 200B from the user interface device 104 and output a control signal 206 to configure the material testing apparatus 102 in dependence on the user input data. The user input data comprises at least a hardware input data 200A indicative of a selected hardware fixture, and configuration input data 200B indicative of selected configuration parameter(s) input by the user at the user interface 104a, as will be explained.

The control system comprises one or more processors 202. The one or more processors 202 may comprise one or more processing device(s) configured to execute computer-readable instructions. The control system 200 further comprises a memory 204. The memory 204 may comprise one or more volatile and/or non-volatile memory device(s), such as random-access memory (RAM), flash memory, read-only memory (ROM) or the like. The memory 204 is configured to store computer-readable instructions 204a for configuring the material testing apparatus 102. The processor(s) 202 are configured to execute the instructions 204a to control the user interface 104a and perform the functions described herein with reference to FIG. 3 to FIG. 6.

With reference to FIG. 3, the control system 200 is configured to provide a user interface 104a at the user interface device 104. The user interface 104a is for facilitating the configuration of the material testing apparatus 102 based on user input at the user interface 104a. The user interface 104a comprises at least a hardware input field for receiving a hardware input indicating a selected hardware fixture in use with the material testing apparatus, and one or more configuration input fields for receiving a configuration input indicating a selected configuration parameter for operation of the material testing apparatus.

The hardware input field and the configuration input field(s) may be provided on the same screen of the user interface 104a, or may be distributed across multiple screens. By "screen", it is meant a set of content displayed on the user interface 104a at one point in time. That is, the hardware input field and the configuration input fields may be simultaneously displayed on the user interface 104a, or may be separately displayed as a first screen and at least one second screen. The first screen and at least one second screen may be displayed consecutively in a workflow, or may be separate. That is, the first screen and at least one second screen may be navigated to independently at the user interface 104a by a user, e.g. by selecting different parts of a displayed menu. In the illustrated embodiment, FIG. 3 illustrates an example first screen 300 of the user interface 104a, i.e., a displayed content of the user interface 104a at a first time point. When the first screen 300 is displayed, the user interface 104a is arranged to display the hardware input field 304 comprising a plurality of selectable hardware fixtures 302 for the material testing apparatus 102. A respective selected hardware fixture 302 may be provided on the user interface to correspond to each of the available hardware fixtures 102a, ..., 102d for use in the material testing system 100. That is, each of the plurality of selectable hardware fixtures 302 may correspond to a hardware fixture 102a, ..., 102d which can be removably fitted to the material testing apparatus 102. For example, the plurality of selectable hardware fixtures 302 may comprise one or more of: an automatic grip; a manual grip; a compression platen; a 3 point bend; a 4 point bend; a fixture for material testing of a spinal implant; a fixture for material testing of a dental implant; an XY stage; a clevis; a pull-rod; or a collet grip, though it will be appreciated that this list is non-exhaustive. Twelve selectable hardware fixtures 302 are illustrated in FIG. 3, however the number shown may be pre-configured to correspond to the number of hardware fixtures available for use by the end user.

Each selectable hardware fixture 302 on the user interface 104a may comprise a textual indication or label and/or a graphical indication of the hardware fixture. The user interface 104a may also comprise additional information about each hardware fixture, such as a specimen insertion graphic, a specimen insertion tip, or the like. A user may then provide a hardware input to the user interface 104a to select one of the selectable hardware fixtures. Hardware input data 200A is then provided to the control system 200 indicative of the hardware input, and the control system 200 is configured to determine a selected hardware fixture in dependence thereon. The user interface 104a may prompt the user to provide the hardware input to select a current fixture. Thus, the selected hardware fixture determined by the control system 200 corresponds to a fixture currently fitted to the material testing apparatus.

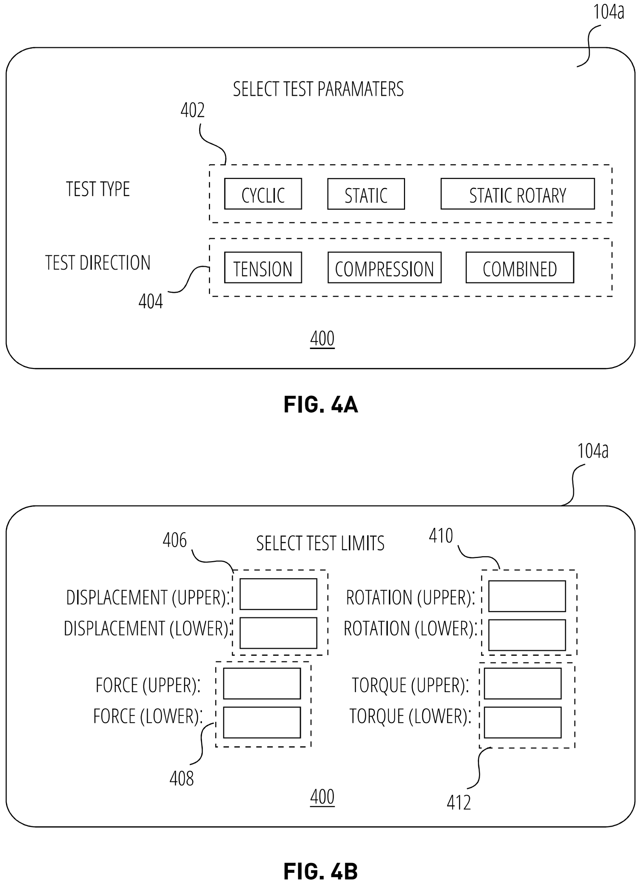

The control system 200 is then configured to control the user interface 104a to restrict an available input for at least one of the configuration input fields in dependence on the selected hardware fixture, as will be explained. In this way, the user interface 104a is advantageously controlled to restrict subsequent input fields to limit the fields to appropriate values or options for the selected hardware fixture, thereby streamlining the configuration process for the user by reducing the amount of available settings. Further, inappropriate or incompatible options can be removed, thereby preventing damage to the material testing apparatus. Examples will be provided with reference to FIG. 4A to FIG. 6.

With reference to FIG. 4A and FIG. 4B, the user interface 104a may be configured to display at least one second screen 400 comprising the one or more configuration input fields 402, 404, 406, 408, 410, 412. The user interface 104a may be configured to switch from displaying the first screen 300 to displaying the at least one second screen 400 in dependence on a user input, for example in response to the hardware input, or in response to a second input for progressing through the setup process.

In the illustrated embodiment, two second screens 400 are shown, one in FIG. 4A and one in FIG. 4B. The screens may be progressively presented to the user on the user interface 104a, for example through navigation by user input. In other examples, the configuration input fields may be distributed across more or fewer screens. In other embodiments, the hardware input field and the configuration input fields may be all concurrently displayed on a single screen by the user interface 104a. The user interface 104a may be configured to sequentially display a plurality of second screens, for example a test parameter screen, a tuning screen and a limit screen, as will be described.

FIG. 4A illustrates a second screen displayed by the user interface 104a according to some embodiments. The second screen 400 is a test parameter screen for receiving user input to define test parameters of the material testing apparatus. That is, each configuration input field 402, 404 is indicative of a respective test configuration parameter for the material testing apparatus 102.

In the illustrated embodiment, a first configuration input field comprises a test type field 402 for selecting a cyclic, a static, or a static rotary test type for the material testing apparatus. The user may provide a configuration input to the test type field 402 to define a selected test type. In some embodiments, more or fewer test types may be defined, depending on the capabilities of the material testing apparatus.

A second configuration input field comprises a test direction field 404 for selecting a tension, a compression, or a combined test direction for the material testing apparatus. The user may provide a configuration input to the test direction field 404 to define a selected test direction. In some embodiments, more or fewer test directions may be defined, depending on the capabilities of the material testing apparatus.

Turning to FIG. 4B, a further second screen 400 for display by the user interface 104a is shown. The user interface 104a may be arranged to navigate between screens, to consecutively display the content of each second screen 400 to the user. The screen 400 displayed in FIG. 4B is a test limit screen 400 for receiving user input to define test limits of the material testing apparatus. That is, each configuration input field 406, 408, 410, 412 is indicative of a respective set of test limit configuration parameters for the material testing apparatus 102.

In the illustrated embodiment, the configuration input fields include a test position, or displacement, limit field 406 for selection of an upper and/or a lower position limit of a specimen or an actuator of the material testing apparatus. The configuration input fields further include a test force limit field 408 for selection of an upper and/or a lower force limit applied to a specimen of the material testing apparatus. In some embodiments, the configuration input fields may further comprise rotary limit fields 410, 412, defining equivalent limits on rotary tests. For example, the configuration input fields may comprise a rotation limit field 410 for selection of an upper and/or a lower rotation limit applied to a specimen, and/or a torque limit field 412 for selection of an upper and/or a lower torque limit applied to a specimen of the material testing apparatus.

The configuration input fields displayed in FIG. 4A and FIG. 4B are not limiting, and in some embodiments the user interface 104a may provide additional or alternative configuration input fields depending on the input required to configure the material testing apparatus.

Once the user has provided input for each field, the control system 200 is configured to determine, in dependence on a configuration input provided to each of the one or more configuration input fields, a selected configuration parameter for each of the one or more configuration input fields, and output a control signal 206 to configure and/or control movement of the material testing apparatus 102 according to each selected configuration parameter. For example, the control signal 206 may cause the apparatus to perform tuning according to one or more of the selected parameters, may set one or more limits to prevent the apparatus exceeding the limits in position, force, torque or rotation, and/or may set a direction in which the apparatus is available to operate.

Various fields may be restricted by the control system 200 in dependence on the selected hardware fixture, as will be explained.

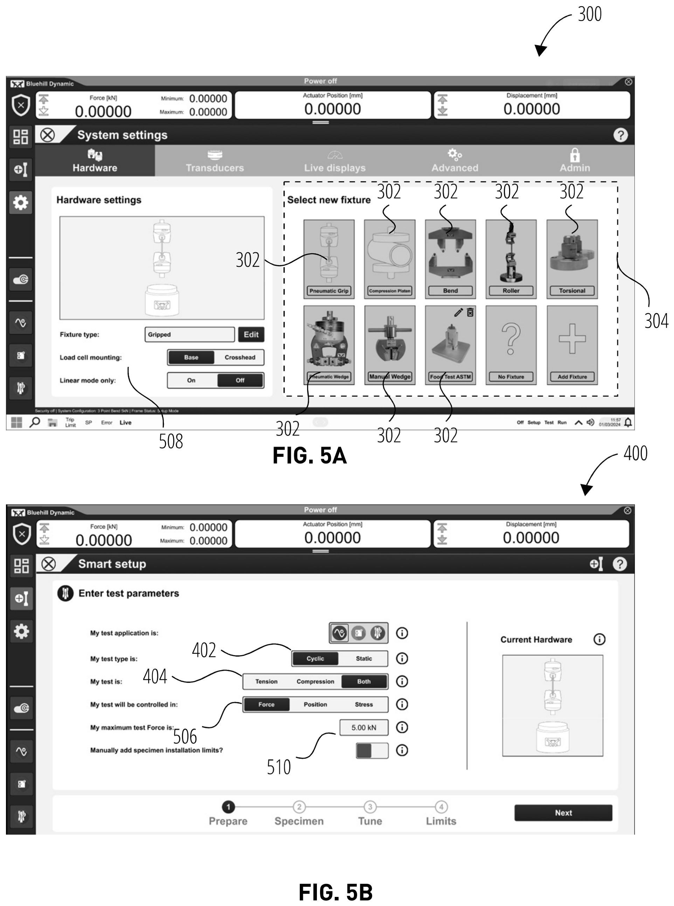

FIG. 5A to FIG. 5D illustrate a plurality of screens displayed on the user interface 104a for configuration according to another embodiment. FIG. 5A illustrates a first screen 300 analogous to that shown in FIG. 3, with a hardware input field 304 defining a number of exemplary selectable hardware fixtures 502 each having a textual and graphical indication. The screen 300 displayed in FIG. 5A further comprises a field displaying additional information 508 associated with the selected hardware fixture, such as a fixture type, a load cell mounting and a linearity of the selected hardware fixture.

FIG. 5B illustrates a second screen 400 analogous to that shown in FIG. 4A. FIG. 5B illustrates a test parameter screen for receiving user input to define test parameters of the material testing apparatus, comprising the test type field 402 and the test direction field 404. The screen 400 of FIG. 5B further comprises a test control input field 506 for defining whether the test will be controlled in force, position or stress. The screen 400 of FIG. 5B further comprises a maximum test force input field 510 for defining a maximum test force to be applied.

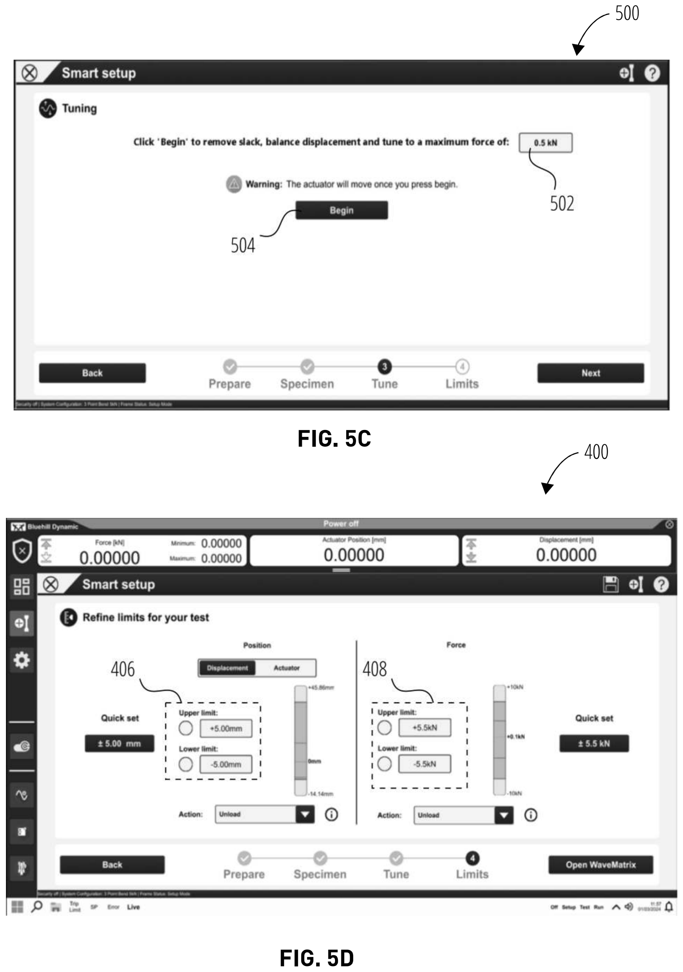

Turning to FIG. 5C, the user interface 104a may display a tuning screen 500 according to some embodiments. That is, the user interface 104a may further display one or more tuning fields each indicative of a tuning parameter for the material testing apparatus. In the illustrated embodiment, the user interface 104a displays a tuning field 502 defining a maximum force for tuning the apparatus, and a tuning input field 504 for controlling the material testing apparatus 102 to begin tuning based on the tuning parameter selected in the tuning field 502. In another example, the tuning parameter may comprise a maximum tuning displacement.

Turning to FIG. 5D, there is illustrated a test limit screen 400 analogous to that displayed in FIG. 4B. In FIG. 5D, the rotary limit fields have been omitted.

The control system 200 is configured to restrict one or more of the configuration input fields, such as those illustrated in FIG. 4A, FIG. 4B, FIG. 5B, FIG. 5C and FIG. 5D, in dependence on the selected hardware fixture, to simplify the configuration process and prevent damage to the material testing apparatus. Additionally, the control system 200 may be configured to display suggested parameters for one or more of the configuration input fields in dependence on the selected hardware fixture.

A worked example of restrictions and suggestions provided by the control system 200 according to some embodiments is described herein, for use with the configuration input fields displayed in FIG. 4A to FIG. 5D. However, it will be appreciated that in other embodiments, a different set of suggestions and/or restrictions may be defined, to adapt to the particular material testing apparatus and hardware fixtures 102a, 102b, ... , 102d.

In one example, the control system 200 is configured to access hardware dependent configuration data. The hardware dependent configuration data may be stored in the memory 204 or may be otherwise accessible to the control system 200, e.g., via one or more communication networks. The hardware dependent configuration data is indicative of each of the plurality of selectable hardware fixtures and, for each hardware fixture, a corresponding set of restrictions for the configuration parameters. For example, the hardware dependent configuration data may be a look up table, database, or other data structure.

Each selectable hardware fixture may be assigned one or more properties in the hardware dependent configuration data, wherein each property is associated with a corresponding set of restrictions for the hardware fixture(s) assigned that property. According to some embodiments, the properties may include a linear only property indicating the assigned hardware fixture(s) are only suitable for linear testing, a test direction property indicating whether the allowed test direction is any, compression, or tension, and a fracture enabled property indicating whether fracture testing is facilitated by the hardware fixture. A list of example hardware fixtures and an indication of which properties are assigned according to one embodiment is illustrated below:

| **Fixture** | **Linear Only** | **Test Direction** | **Fracture Enabled?** |
|---|---|---|---|
| Automatic Grips | | Any | Yes |
| Manual Grips | | Any | Yes |
| Compression Platens | Yes | Compression only | |
| 3 Point Bend | Yes | Compression only | Yes |
| 4 Point Bend | Yes | Compression only | |
| Spinal Implant | | Compression only | |
| Dental Implant | Yes | Compression only | |
| XY Stage | Yes | Compression only | |
| Inverted Bend | Yes | Compression only | Yes |
| Clevis | Yes | Tension only | Yes |
| HT Pullrods | Yes | Any | Yes |
| Collet Grips | | Any | |

Example restrictions associated with the described properties according to one embodiment are outlined below:

| **Hardware Property** | **Impact on Workflow** | | |
|---|---|---|---|
| | **Prepare** | **Tune** | **Test Limits** |
| Linear Only - Y | Rotary test type option removed | No rotary tuning | No rotary axis test limits |
| Linear Only - N | * | * | * |
| Supported Test Direction - Any | * | * | * |
| Supported Test Direction - Tensile Only | Test direction field removed | Tuning will have a remove slack step and be tensile | Suggested test limits will prevent compressive movement/loading |
| Supported Test Direction - Compressive Only | Test direction field removed | Tuning will have a make contact step and be compressive | Suggested test limits will prevent tensile movement/loading |
| Fracture Enabled - Y | * | * | * |
| Fracture Enabled - N | Fracture test application removed | * | * |

As can be seen, the restrictions may include limiting an available range of values for the field; removing one or more options for selection from the field; automatically selecting a configuration parameter for the field; or removing the field.

In the example above, if the selected hardware fixture is associated with the linear only property, the rotary static test type is removed from the test type field 402. Further, no rotary tuning parameters are provided, and the rotary limit fields 410, 412 are removed. In this way, the material testing apparatus is prevented from operating a rotary test if the hardware fixture does not support rotary testing.

In the example above, if the supported test direction of the selected hardware fixture is tensile only, the test type field 402 is removed. Further, the tuning parameters are adapted for tensile tuning, and the test limit fields will be provided with suggested test limits to prevent compressive movement. In this way, the material testing apparatus is prevented from compression.

In the example above, if the supported test direction of the selected hardware fixture is compressive only, the test type field 402 is removed. Further, the tuning parameters are adapted for compressive tuning, and the test limit fields will be provided with suggested test limits to prevent tensile movement. In this way, the material testing apparatus is prevented from tension.

In the example above, if the hardware fixture is not associated with the fracture enabled property, any test application for performing fracture will be removed from the user interface 104a.

Further, each hardware fixture 102a may also be associated with a set of predefined hardware limits, such as position limits or force limits. The user interface may then be controlled to restrict the limit fields for the test limits in dependence on the hardware limits, such that the test limits cannot be set to exceed the hardware limits. In some embodiments, the hardware limits may be preconfigured and stored as part of the hardware dependent configuration data, and thus may be associated with the hardware fixture 102a in memory. In other embodiments, the hardware limits may be configured by the user. For example, the user interface 104a may be configured to provide a hardware limit input field for receiving a hardware limit input for the selected hardware fixture. In this way, the user can manually set hardware limits prior to configuring the apparatus.

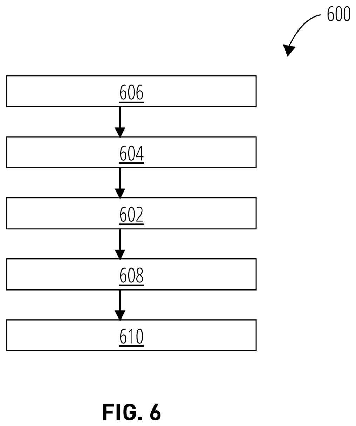

With reference to FIG. 6, there is illustrated a computer-implemented method for configuring a material testing apparatus, such as the material testing apparatus 102. The method may be performed by the control system 200. The method comprises a step 602 of providing a user interface for configuration of the material testing apparatus at a user interface device associated with the material testing apparatus, the user interface comprising: a hardware input field comprising a plurality of selectable hardware fixtures for the material testing apparatus; and one or more configuration input fields each indicative of a configuration parameter for the material testing apparatus. The method comprises a step 604 of determining, in dependence on a hardware input provided to the hardware input field, a selected hardware fixture of the plurality of selectable hardware fixtures. The method comprises a step 606 of controlling the user interface to restrict an available input for at least one of the configuration input fields in dependence on the selected hardware fixture. The method comprises a step 608 of determining, in dependence on a configuration input provided to the one or more configuration input fields, a selected configuration parameter for each of the one or more configuration input fields. The method comprises a step 610 of configuring the material testing apparatus according to each selected configuration parameter.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A control system for a material testing apparatus, the control system comprising:
one or more processors; and
a memory storing computer executable instructions therein which, when executed by the one or more processors, cause the one or more processors to:
provide a user interface for configuration of the material testing apparatus at a user interface device associated with the material testing apparatus, the user interface comprising:
a hardware input field comprising a plurality of selectable hardware fixtures for the material testing apparatus; and
one or more configuration input fields each indicative of a configuration parameter for the material testing apparatus;
determine, in dependence on a hardware input provided to the hardware input field, a selected hardware fixture of the plurality of selectable hardware fixtures;
control the user interface to restrict an available input for at least one of the configuration input fields in dependence on the selected hardware fixture;
determine, in dependence on a configuration input provided to the one or more configuration input fields, a selected configuration parameter for each of the one or more configuration input fields; and
output a control signal to configure and/or control movement of the material testing apparatus according to each selected configuration parameter.

2. The control system of claim 1, wherein each of the plurality of selectable hardware fixtures correspond to fixtures which can be removably fitted to the material testing apparatus, and wherein the selected hardware fixture corresponds to a fixture currently fitted to the material testing apparatus.

3. The control system of claim 1 or 2, wherein the plurality of selectable hardware fixtures comprise one or more of: an automatic grip; a manual grip; a compression platen; a 3 point bend; a 4 point bend; a fixture for testing a spinal implant; a fixture for testing a dental implant; an XY stage; a clevis; a pull-rod; or a collet grip.

4. The control system of any one of claims 1 to 3, wherein the memory is configured to store hardware dependent configuration data, the hardware dependent configuration data indicative of the plurality of selectable hardware fixtures and, for each hardware fixture, a corresponding set of restrictions for the configuration parameters;
and wherein the instructions cause the one or more processors to:
retrieve, from the hardware dependent configuration data, the set of restrictions corresponding to the selected hardware fixture; and
control the user interface to restrict the one or more configuration input fields in dependence on the retrieved set of restrictions.

5. The control system of any one of claims 1 to 4, wherein the instructions cause the one or more processors to control the user interface to restrict the at least one of the configuration input fields by:
limiting an available range of values for the field;
removing one or more options for selection from the field;
automatically selecting a configuration parameter for the field; or
removing the field.

6. The control system of any one of claims 1 to 5, wherein the instructions further cause the one or more processors to:
control the user interface to display a suggested parameter for at least one of the configuration input fields of the user interface in dependence on the selected hardware fixture.

7. The control system of any one of claims 1 to 6, wherein the one or more configuration input fields includes a test position limit field for selection of an upper and/or a lower position limit of an actuator of the material testing apparatus; and
the instructions cause the one or more processors to control the user interface to restrict available values of the test position limit field in dependence on the selected hardware fixture.

8. The control system of any one of claims 1 to 7, wherein the one or more configuration input fields includes a test force limit field for selection of an upper and/or a lower force limit of an actuator of the material testing apparatus; and
the instructions cause the one or more processors to control the user interface to restrict the available values of the test force limit field in dependence on the selected hardware fixture.

9. The control system of any one of claims 1 to 8, wherein:
the configuration input fields comprise a test type field for selecting a cyclic, a static, or a static rotary test type parameter for the material testing apparatus; optionally wherein:
a subset of the plurality of selectable hardware fixtures are categorized as linear only hardware fixtures; and wherein the instructions cause the one or more processors to:
in dependence on the selected hardware fixture being categorized as a linear only hardware fixture, control the user interface to restrict an available input for the test type field to remove the static rotary test type.

10. The control system of any one of claims 1 to 9, wherein:
the configuration input fields comprise a test direction field for selecting a tension, a compression, or a combined test direction parameter; optionally wherein:
a subset of the plurality of selectable hardware fixtures are categorized as tensile only hardware fixtures, and a further subset of the plurality of selectable
hardware fixtures are categorized as compressive only hardware fixtures; and wherein the instructions cause the one or more processors to:
in dependence on the selected hardware fixture being categorized as a tensile only hardware fixture, automatically select the test direction parameter to be tension; and
in dependence on the selected hardware fixture being categorized as a compressive only hardware fixture, automatically select the test direction parameter to be compression.

11. The control system of any one of claims 1 to 10, wherein the user interface further comprises one or more tuning fields each indicative of a tuning parameter for the material testing apparatus; and wherein the instructions cause the one or more processors to:
provide, on the one or more tuning fields of the user interface, suggested tuning parameters in dependence on the selected hardware fixture; and
control the material testing apparatus to perform tuning based on the tuning parameters; optionally wherein the tuning parameters comprise a maximum tuning force and/or a maximum tuning displacement.

12. The control system of any one of claims 1 to 11, wherein the user interface comprises:
a first screen comprising the hardware input field; and
at least one second screen comprising the one or more configuration input fields; and
wherein the user interface is configured to switch from the first screen to the at least one second screen in dependence on a user input.

13. A material testing system comprising:
a material testing apparatus;
the control system of any of claims 1 to 12; and
an user interface device associated with the material testing apparatus.

14. A computer-implemented method for configuring a material testing apparatus, the method comprising:
providing a user interface for configuration of the material testing apparatus at a user interface device associated with the material testing apparatus, the user interface comprising:
a hardware input field comprising a plurality of selectable hardware fixtures for the material testing apparatus; and
one or more configuration input fields each indicative of a configuration parameter for the material testing apparatus;
determining, in dependence on a hardware input provided to the hardware input field, a selected hardware fixture of the plurality of selectable hardware fixtures;
controlling the user interface to restrict an available input for at least one of the configuration input fields in dependence on the selected hardware fixture;
determining, in dependence on a configuration input provided to the one or more configuration input fields, a selected configuration parameter for each of the one or more configuration input fields; and
configuring and/or controlling movement of the material testing apparatus according to each selected configuration parameter.

15. Computer software which, when executed, is arranged to perform a method according to claim 14.
